# EUROPEAN PATENT APPLICATION

(11) **EP 3 202 385 A1**
(43) Date of publication of application: **09.08.2017**
(21) Application number: 15846082.4
(22) Date of filing: 11.08.2015
(51) Int. Cl.: A61G 3/02, A61G 5/00, B61D 23/02, E04F 11/00

(54) **PORTABLE SLOPE**

(30) Priority: 29.09.2014 JP 2014198662
(71) Applicant: Sumitomo Rubber Industries, Ltd., Kobe-shi, Hyogo 651-0072 (JP); Toray Industries, Inc., Tokyo, 103-8666 (JP)
(72) Inventor: UENO, Masahiko, Kobe-shi Hyogo 651-0072 (JP); MATSUSHITA, Masayuki, Kobe-shi Hyogo 651-0072 (JP); NAGASE, Hajime, Shimada-shi Shizuoka 427-8512 (JP); NOGUCHI, Yohei, Nagoya-shi Aichi 455-8502 (JP)
(74) Representative: Hoefer & Partner Patentanwälte mbB
(86) International application number: PCT/JP2015/072756
(87) International publication number: WO 2016/051966

(57) **Abstract**

A portable slope comprising at least a plate member and a first reinforcing part, and configured in a manner such that the first reinforcing part extends in the longitudinal direction of the slope, a hollow part is formed between the plate member and the first reinforcing part, the shape of the cross-section perpendicular to the logitudinal direction of the first reinforcing part is quadrangular, and the like. Provided is a portable slope to be used to bridge a difference in step produced between buildings and train car bodies, the portable slope being lightweight and exhibiting excellent load bearing characteristics and durability, making it possible for a wheelchair-user to safely travel on the slope by the positioning of derailment prevention walls on both lateral surfaces of the slope, and further exhibiting excellent portability as a result of the slope itself being lightweight.

## Description

### Technical Field of the Invention

Our invention relates to a slope to be used to bridge a difference in step produced between things, the slope being lightweight and exhibiting excellent load resistance and durability, making it possible for a wheelchair-user to safely get on and off a train with the slope, and further exhibiting excellent portability.

### Background Art of the Invention

Recently, public institutions are provided with elevators and escalators as barrier-free measures. A detour slope may be installed beside stairs so that a wheelchair can easily go through. However, many steps still exist inside and outside of the buildings such as public institutions. Although such steps can easily be cleared by a healthy person, a wheelchair user and an old person may have some difficulty of getting over them.

Even if they proceed with infrastructure construction for barrier-free society, there exist many steps left, such as steps between sidewalk and street, steps between bus door and road, ditches on the street, steps and ditches between train door and platform, obstructing wheelchairs passing.

Such many steps exist even inside and outside personal residences where wheelchair users and elder people live, as well as in a public space and transportation facilities.

Recently, a portable slope may be used as a bridging plate set from a platform into a train or another bridging plate set from a road into a bus as needed when a wheelchair is rolled from a platform into a train or from a train door to the platform, or when a wheel chair is rolled from a road into a bus or from a bus door to the road.

These slopes should be lightweight enough to be carried easily, so that they are preferably made of resin, which is specifically fiber-reinforced plastic being lightweight and excellent in load bearing characteristics disclosed in Patent documents 1 and 2, rather than metal and wooden slopes.

A slope for wheelchairs, being an implement on which a wheelchair with a person in need of nursing care is rolled forward and backward by an assistant, should be prevented from damaging with insufficient strength and falling from the wheelchair because of derailing. For example, a derailment prevention wall may be provided on an edge part of the slopes in a wheelchair rollup direction. The impact durability of the derailment prevention wall is important because it might be hit by a wheelchair wrongly controlled by an assistant. It is also important that a slope edge part which might be hit during carriage and the corresponding derailment prevention wall have a good impact durability.

Patent document 1 (JP2011-217963-A) discloses "a slope for getting on and off train, to be bridged between a train door and a platform, comprising: a plate-shaped slope main body which is long enough to put one end into the door and the other end on the platform and is wide enough to allow a wheelchair to roll; a hook member having a hanging piece to be bent downward to engage a step part provided in the door, the hanging piece on a tip part of a base piece which is fixed to an edge part of the one end of the slope main body and extends in a direction getting away from the slope main body; and a flap which extends in a direction getting away from the base piece and is swingably connected to the hook member around an axis line along a width of the slope main body, wherein the slope main body is made of a fiber-reinforced resin", achieving an advantage that "a wheelchair user can easily roll on the slope main body between the platform and the train because of the plate-shaped slope main body which is long enough to put one end into the door and the other end on the platform and is wide enough to allow a wheelchair to roll".

However, Patent document 1 only refers to the slope made of fiber-reinforced resin but fails to suggest any simultaneous pursuit of weight saving and load bearing characteristics. Also, a normal plate may not achieve sufficient load bearing characteristics because load tends to concentrate to tires of wheelchair or the like rolling on the slope. In addition, it doesn't refer to any improvement of impact durability of the short height protection wall part provided at both edges in the width direction of the slope main body to prevent wheelchairs from derailing out of it.

Patent document 2 (JP2013-162818-A) discloses a configuration of "two or more of plyboards which are arranged in parallel with respect to the running direction and the opposing lateral surfaces of the plyboards are connected through sheet material 6 so that the plyboards can be folded on top of each other, wherein the plyboards comprising Fiber-Reinforced Plastic (FRP) plate members bonded to both top and bottom sides of a quadrel core member made of foamable resin has tapered structures 4 and 5 provided at the upper and lower sides in the running direction to eliminate difference in level of the plyboards with a structure in which frame member 9 is fitted with outer lateral sides in the running direction", achieving an advantage that "it is lightweight enough to be easily carried and has a good processability to produce an optimal sized one easily and cheaply, together with excellent fixation ability, less breakage derived from high impact durability of slope edge part and derailment prevention walls and excellent repairability". That slope consists of plyboard comprising carbon fiber-reinforced plastic members bonded to both top and bottom sides of a core member made of foamable resin such as hard urethane, polypropylene and acrylic.

However, production cost might be expensive with many processes to produce a laminate body disclosed in Patent document 2 since it discloses a plyboard having a laminated structure of carbon fiber-reinforced plastic strongly bonded to both top and bottom sides of foamable resin. Also, a normal plate may not achieve sufficient load bearing characteristics because load tends to concentrate to tires of wheelchair or the like rolling on the slope even though rigidity may be improved by the laminate structure. In addition, the derailment prevention wall provided at both lateral surfaces might be insufficiently bonded to both sides of plyboards because of little thickness of plyboards contributing the integrated bonding of the plate member and derailment prevention wall.

Patent document 3 (JP2003-230600-A) discloses a configuration of "a portable slope comprising fiber-reinforced plastic plate members bridged between a step produced between things, wherein a derailment prevention wall is provided by height h on a top end side of plate member located at both left and right sides of the portable slope so that height h, thickness t and surface pressure resistance of the derailment prevention wall are set withing a predetermined range", achieving an advantage that "it is lightweight and easily carried while the derailment prevention wall is hardly broken even when a wheel runs on". Patent document 3 discloses a preferable method of forming a plate member and derailment prevention walls integrally to make the derailment prevention wall hard to break in a configuration such that after reinforcing fibers are wound on a core member made of hard foaming polyurethane or the like and then are placed in a die, matrix agent is poured into the die to form the plate member and derailment prevention walls integrally.

However, the derailment prevention wall disclosed in Patent document 3 might be insufficiently bonded because of little thickness of plate member contributing the integrated bonding of the plate member and derailment prevention wall.

Patent document 4 (JP2014-103983-A) discloses "a portable slope having a slope main body comprising a plate-shaped core made of cardboard and a reinforcing layer made of fiber-reinforced resin member pasted on top and bottom sides of the plate-shaped core", achieving an advantage that "relative to a plate-shaped core made of foamed polyurethane, strain applied to users can be reduced by saving weight as maintaining required rigidity".

However, production cost might be expensive with many processes to produce a laminate body disclosed in Patent document 4 since it discloses a slope main body comprising a plate-shaped core made of cardboard and a reinforcing layer made of fiber-reinforced resin member pasted on top and bottom sides. Also, a normal plate may not achieve sufficient load bearing characteristics because load tends to concentrate to tires of wheelchair or the like rolling on the slope even though weight saving may be possible. In addition, the derailment prevention wall provided at both lateral surfaces might be insufficiently bonded to both sides of plate-shaped core made of cardboard because of little thickness of plyboards contributing the integrated bonding of the plate member and derailment prevention wall.

### Prior art documents

### Patent documents

Patent document 1: JP2011-217963-A
Patent document 2: JP2013-162818-A
Patent document 3: JP2003-230600-A
Patent document 4: JP2014-103983-A

### Summary of the Invention

### Problems to be solved by the Invention

According to such problems of background art, it could be helpful to provide a portable slope used to bridge a difference in step produced between things, the slope being lightweight and exhibiting excellent load resistance and durability, maintaining the rigidity even when loaded on the slope by a wheelchair-user, and further exhibiting excellent portability of the slope itself.

### Means for solving the Problems

(1) A potable slope comprising at least a plate member and a first reinforcing part which is provided as extending along a longitudinal direction of the slope, wherein a hollow part is formed between the plate member and the first reinforcing part.
(2) The portable slope according to (1), wherein the first reinforcing part has a quadrangular cross section which is perpendicular to the longitudinal direction.
(3) The portable slope according to (2), wherein the first reinforcing part has a trapezoid cross section perpendicular to the longitudinal direction, the trapezoid having at least one basic angle of 30 to 90° to contact the plate member.
(4) The portable slope according to (3), wherein the first reinforcing part has at least one isosceles trapezoid cross section perpendicular to the longitudinal direction.
(5) The portable slope according to (3) or (4), wherein the basic angle located at a plate member lateral part is right angle.
(6) The portable slope according to any one of (1) to (5), further comprising a second reinforcing part.
(7) The portable slope according to (6), wherein the second reinforcing part is formed to be inserted into the hollow part between the plate member and the first reinforcing part.
(8) The portable slope according to (6) or (7), wherein the plate member, the first reinforcing part and the second reinforcing part are made of a fiber-reinforced plastic.
(9) The portable slope according to any one of (1) to (8), wherein the derailment prevention wall is provided to be joined to at least a part of the plate member lateral end surface and the first reinforcing part lateral end surface.
(10) The portable slope according to (9), wherein the derailment prevention wall is provided to be joined to a whole of the lateral end surface of the plate member and the lateral end surface of the first reinforcing part.
(11) The portable slope according to (9) or (10), wherein the plate member, the first reinforcing part and the derailment prevention wall are formed integrally.

### Effect according to the Invention

The above-described portable slope, which is used to bridge a difference in step produced between things, the slope being lightweight and exhibiting excellent load bearing characteristics and durability, makes it possible for a wheelchair-user to safely get on and off a train with the slope, as exhibiting excellent portability.

### Brief explanation of the drawings

[Fig. 1] Fig. 1 is a top side perspective view showing a portable slope according to an example of our invention.
[Fig. 2] Fig. 2 is a bottom side perspective view showing a portable slope according to an example of our invention.
[Fig. 3] Fig. 3 is a bottom view showing a portable slope according to an example of our invention.
[Fig. 4] Fig. 4 is an A-A cross section view of slope 1 shown in Fig. 3.
[Fig. 5] Fig. 5 is an A-A cross section view of slope 1 shown in Fig. 3 with another first reinforcing part configuration.
[Fig. 6] Fig. 6 is a cross section view showing a state in which a second reinforcing part is inserted into a hollow part formed between a plate member and a first reinforcing part.
[Fig. 7] Fig. 7 is a top side perspective view showing a state in which plate members are arranged in parallel with respect to the longitudinal direction and are connected with opposing lateral surfaces of the plate member.
[Fig. 8] Fig. 8 is a bottom view showing a state in which plate members are arranged in parallel with respect to the longitudinal direction and are connected with opposing lateral surfaces of the plate member.
[Fig. 9] Fig. 9 is a B-B cross section view in Fig. 8.
[Fig. 10] Fig. 10 is a cross section view corresponding to Fig. 9 showing a state in which a second reinforcing part is inserted into a hollow part formed between a plate member and a first reinforcing part.

### Embodiments for carrying out the Invention

Hereinafter, our invention will be explained with reference to the figures. Our invention is not limited specifically with the figures.

To solve the above-described problem, our invention has a configuration of a potable slope comprising at least a plate member and a first reinforcing part which is provided along a longitudinal direction of the slope, wherein a hollow part is formed between the plate member and the first reinforcing part.

With such a basic configuration of our slope comprising at least a plate member and a first reinforcing part which is provided along a longitudinal direction of the slope wherein a hollow part is formed between the plate member and the first reinforcing part, it is possible to achieve weight saving and rigidity securement of the portable slope to be used for wheelchair users to go over a step which exists in a building or is produced between the ground and a door of car, train, bus or the like. The first reinforcing part is provided at the bottom side opposite to a plate member surface on which a movable body such as wheelchair runs, so that the rigidity of the slope itself can be enhanced without interfering with running of wheelchair or the like.

It is preferable that the first reinforcing part has a quadrangular cross section which is perpendicular to the longitudinal direction. Although load is locally concentrated to tires of wheelchair or the like moving on the slope, our configuration can achieve safe conveyance with good load bearing characteristics of the first reinforcing part.

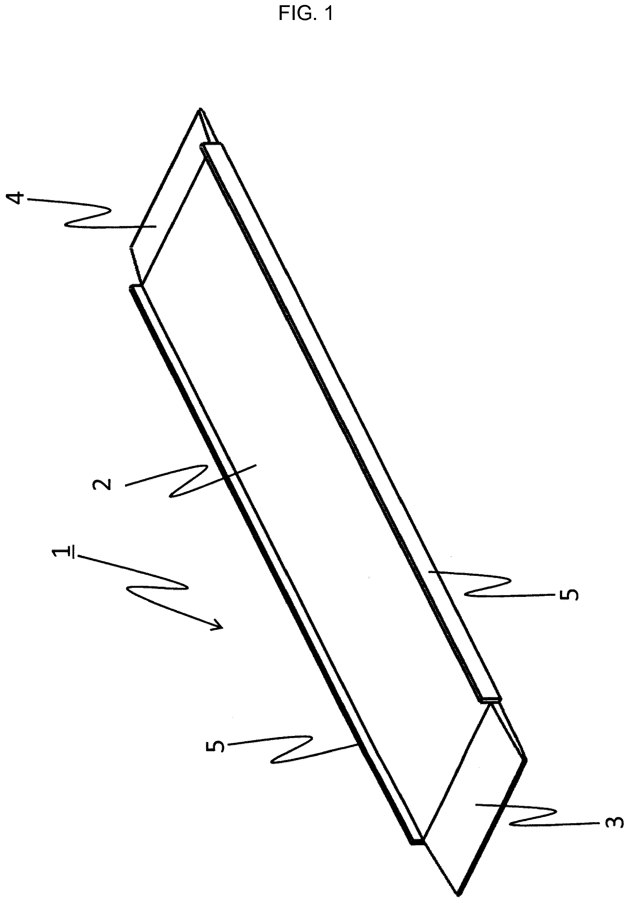

Fig. 1 is a perspective view of a portable slope (which may be called "slope", hereinafter) viewed from the top side.

Symbol 1 indicates a portable slope while symbol 2 indicates a plate member constituting a slope part on which wheelchairs or the like run. Portable slope 1 may be bridged between a train door and a platform. For example, upper end 3 of slope 1 is placed at the train door side while lower end 4 of slope 1 is placed at the platform side. It is preferable that upper end 3 and lower end 4 of slope 1 are formed in a tapered shape so that a predetermined inclination to make wheelchairs easily get on and off. It is also preferable an antislip rubber member is adhered to a contact position of slope 1 between a door and/or a platform. It is preferable that upper end 3 and lower end of slope 1 are made of a plastic, because it is light and cheap.

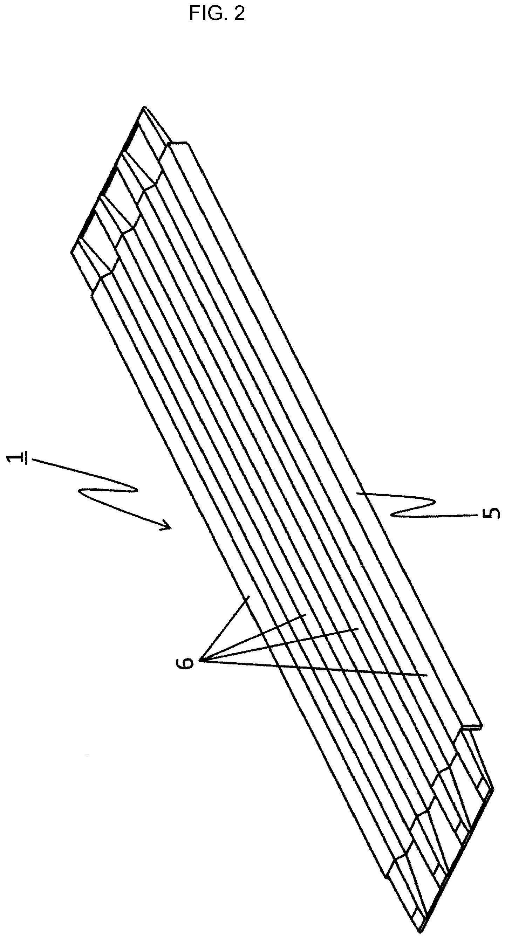

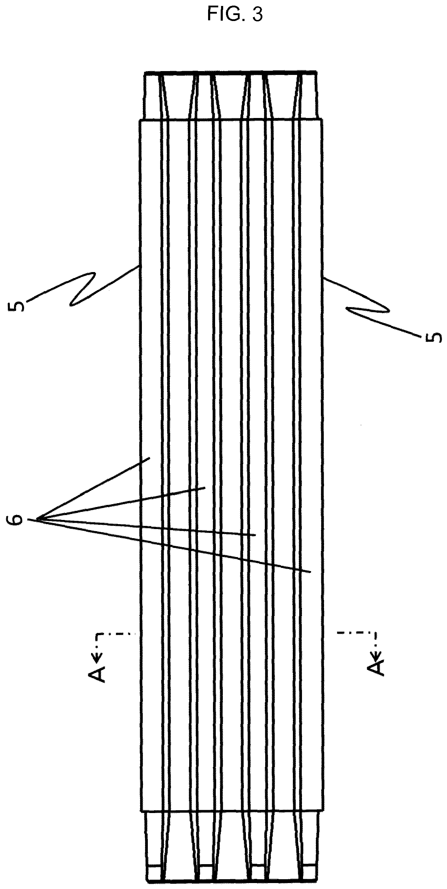

Fig. 2 is a bottom side perspective view of our portable slope while Fig. 3 is a bottom view of our portable slope. Symbol 5 indicates a derailment prevention wall while symbol 6 indicates a first reinforcing part. First reinforcing part 6 is provided in a long continuous form, almost in parallel with the longitudinal direction of plate member 2 which direction is also a running direction of movable body such as wheelchair. Even when a local load is applied from tires of wheelchair or the like moving on slope 1, such a long continuous structure between upper end 3 and lower end 4 can endure the local load.

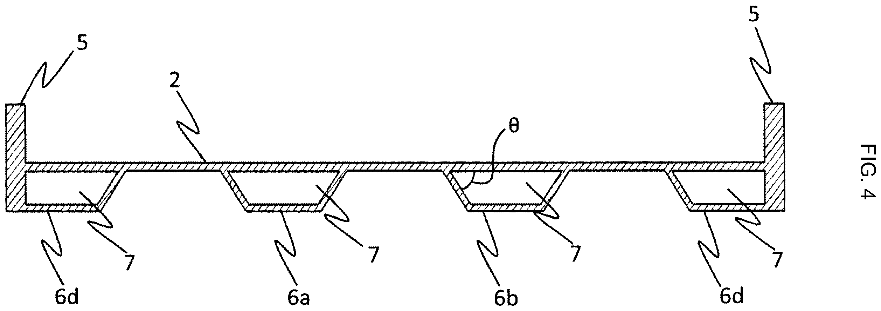

Fig. 4 is an A-A cross section view of slope 1 shown in Fig. 3. Fig. 4 shows a wheelchair or the like moving on a top face of plate member 2. Symbols 6a, 6b and 6d indicates first reinforcing parts, symbol 7 indicates a hollow part formed between a plate and the first reinforcing part, and symbol 5 indicates a derailment prevention wall.

The shape of first reinforcing part 6 will be explained. First reinforcing part 6 is provided as bonded to one side of plate member 2 and hollow part 7 is formed between plate member 2 and first reinforcing part 6. A quadrangular cross section thereof can have a high load bearing characteristics for locally concentrated load.

It is more preferable that the quadrangular cross section shape is trapezoid with basic angles to contact the plate member of first reinforcing part, wherein at least one of the basic angles is 30 to 90° with respect to the horizontal direction of plate member surface.

First reinforcing part 6 formed in a trapezoid shape having a predetermined basic angle is advantageous to improve the load bearing characteristics for load applied to a movable body moving on plate member 2. The basic angle of less than 30° might make the length perpendicular to the plate member of first reinforcing part so that sufficient rigidity cannot be achieved. The basic angle of more than 90° might weaken the load bearing characteristics. In Fig. 4, symbol θ indicates the basic angle of first reinforcing part 6b as a representative example.

The trapezoid shape is a kind of quadrangular which has at least one set of opposite sides in parallel to each other. It is preferable that the trapezoid shape is a normal trapezoid having a lower base to contact plate member 2 which is longer than an upper base although it should be noted Fig. 4 is illustrated upside down. From a viewpoint of good load bearing characteristics, the trapezoid shape having the lower base longer than the upper base is advantageous so that bending deformation of the plate member can be suppressed when a load is applied to the plate member to transmit the load to the first reinforcing part.

In an embodiment shown in Fig. 4, first reinforcing part 6a has a trapezoid shape with the left basic angle of 60° and right basic angle of 60° while first reinforcing part 6b has a trapezoid shape with the right basic angle of 60° and left basic angle of 60°. Such symmetric basic angles of left and right first reinforcing parts 6a and 6b make the load application state balanced. Besides, even when first reinforcing part 6a has a trapezoid shape with the left basic angle of 30° and right basic angle of 60° while first reinforcing part 6b has a trapezoid shape with the right basic angle of 30° and left basic angle of 60°, such symmetric basic angles of first reinforcing parts 6a and 6b make the applied load balanced as well. Another first reinforcing part 6d will be explained later.

It is preferable that one of the first reinforcing parts is isosceles trapezoid, so that a load is applied from the movable body moving on the top side of plate member 2 to the first reinforcing part uniformly to achieve higher load bearing characteristics. That is in a case that first reinforcing part 6a or 6b has a trapezoid shape with the left and right basic angles are the same in Fig. 4.

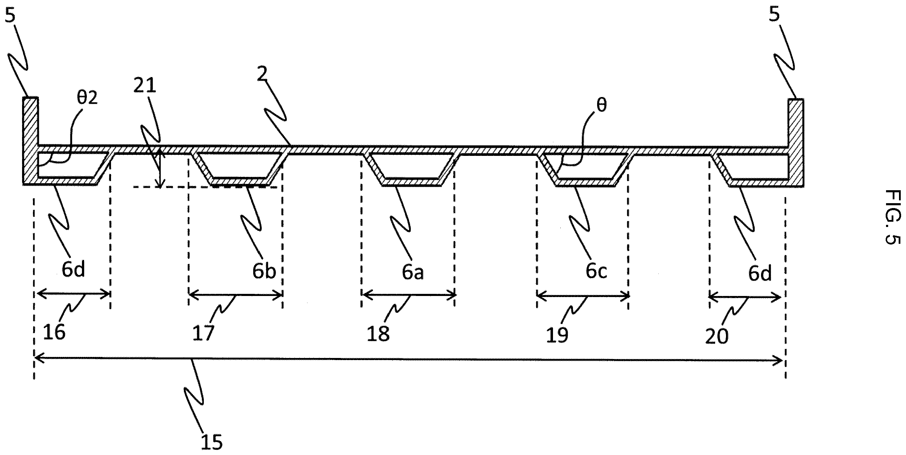

Fig. 5 shows another embodiment of layout of first reinforcing part 6. In such a configuration, an odd number of first reinforcing parts 6 are provided. Specifically, first reinforcing parts 6a, 6b, 6c and 6d are provided. It is preferable that first reinforcing part 6a is provided in the center in the width direction of plate member 2, that first reinforcing parts 6b and 6c are symmetrically disposed at a predetermined interval on both sides of first reinforcing part 6a, so that the load bearing characteristics with respect to the load applied when a movable body having a predetermined weight moves on the top side of plate 2 can be stronger. It is more preferable that first reinforcing part 6a has a isosceles trapezoid shape with symmetrical left and right basic angles as explained for first reinforcing parts 6a and 6b in Fig. 4. It is further preferable that all of first reinforcing part 6a, first reinforcing part 6b and first reinforcing part 6c are a isosceles trapezoid.

It is preferable that one of the basic angles to contact the plate member of the first reinforcing part located at both ends of the plate member is right angle while the lateral surface of the right basic angle is located at the same side as a plate member lateral end surface. At least one first reinforcing part is located at both ends of plate member 2.

The first reinforcing part one of which basic angles is right angle has many joining parts on derailment prevention wall 5 so that the joint strength to derailment prevention wall 5 can be enhanced.

In s cross section views shown in Fig. 4 and Fig. 5, first reinforcing parts 6d are located at both ends. Base angle θ2 located outside the end part of plate 2 of first reinforcing part 6d is right angle. Namely, a lateral surface part is perpendicular to plate member 2 and is located at the same side as plate member 2 lateral end surface. Derailment prevention wall 5 is configured to join both the lateral end surface of plate member 2 and the lateral surface part of first reinforcing part 6d.

It is preferable that slope 1 is provided with derailment prevention wall 5 located to be joined to at least a part of the plate member lateral end surface and the first reinforcing part lateral end surface. It is more preferable that the derailment prevention wall is located to be joined to a whole lateral surface part of the reinforcing part.

Derailment prevention wall 5 provided at both left and right sides of slope 1 can prevent vehicles from dropping and the derailment prevention wall is hardly broken even if a wheel goes over derailment prevention wall 5, and the lightweight product can easily be carried.

One of basic angles θ2 of first reinforcing part 6d corresponding to derailment prevention wall 5 is right angle while a lateral surface of which basic angle θ2 is right angle is located at the same side as a plate member lateral end surface, so that the derailment prevention wall can join the plate lateral end surface and the perpendicular surface of reinforcing part on the same surfaces. Therefore when derailment prevention wall 5 is joined to plate member 2 lateral end surface and first reinforcing part 6d lateral surface part 6d, impact durability can be enhanced with deformation and breakage of derailment prevention wall 5 by joining derailment prevention wall 5 to plate member 2 and first reinforcing part 6d.

It is preferable that derailment prevention wall 5 has a protrusion height of 15 to 30mm from the top side of plate member 2. Derailment prevention wall 5 is not required to be formed all over the length of slope 1, so that it may not be formed at upper end side 3 and lower end side 4. The right angle reserves an allowable range of ±5° from viewpoints of design and production freedom.

It is preferable that at least one of tangent angles at the tangent point to the plate member of the first reinforcing part is 30 to 90°. It is more preferable that the tangent angle is 35 to 80°, preferably 45 to 60°.

The tangent angle at the tangent point to the plate member of the first reinforcing part is set within a predetermined range, so that the load bearing characteristics to the load applied when a movable body moves on plate member 2 is improved. The tangent angle of less than 30° might shorten the length perpendicular to the plate member of the first reinforcing part so that required rigidity cannot be achieved. The tangent angle of more than 90° might weaken the load durability characteristics.

It is preferable that a tangent angle at a tangent point to the plate member of the first reinforcing part 6d located at both ends of the plate member and another tangent angle at another tangent point to derailment prevention wall 5 are right angles, so that the joint strength of derailment prevention wall 5 can be enhanced. The right angle reserves an allowable range of ±5° from viewpoints of design and production freedom.

It is preferable to further provide a second reinforcing part.

It is preferable that the second reinforcing part is formed to be inserted into a hollow part between the plate member and the first reinforcing part.

Assuming a case that a movable body to which heavier load is applied moves, if the weight is forecasted, an elastic member having a predetermined elastic strength may further be provided, so that the load bearing characteristics and usage stability can be improved.

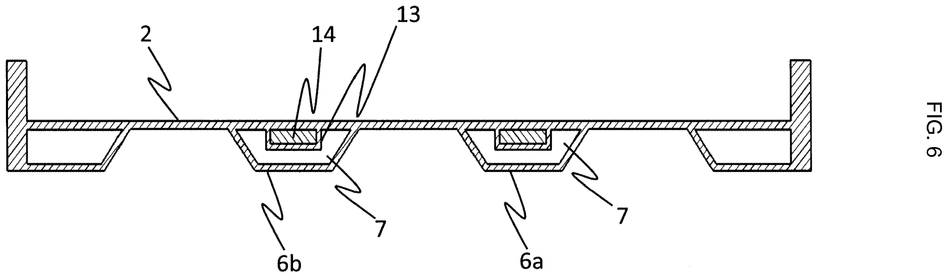

Fig. 6 is a cross section view showing a state in which a second reinforcing part is inserted into a hollow part formed between a plate member and a first reinforcing part. For example, first reinforcing part 6b will be explained. Symbol 13 indicates an insertion slot having a predetermined insertion hole and a predetermined length and being provided for the second reinforcing part to be inserted inside hollow part 7 formed between plate member 2 and the first reinforcing part. Second reinforcing part 14 comprising a long elastic body having a predetermined length is inserted into the inside of insertion slot 13. Because slope 1 is often used as inclined, second reinforcing part 14 is fixed enough not to move inside insertion slot 13.

It is preferable that the first reinforcing part and the second reinforcing part are made of fiber-reinforced plastic. From a viewpoint of weight saving effect, it is preferable that the fiber-reinforced plastic is a carbon fiber-reinforced plastic made from a carbon fiber, such as PAN-based, pitch-based and rayon-based carbon fiber, excellent in specific strength and specific rigidity.

It is preferable that the fiber-reinforced plastic is made from a thermosetting resin such as unsaturated polyester resin, vinyl ester resin, epoxy resin, phenol (resol type) resin and polyimide resin. Above all, it is preferable to employ the epoxy resin from viewpoints of dynamics properties and heat resistance of formed product.

It is preferable that the fiber-reinforced resin comprises carbon fibers of 15 to 80 wt% as fiber weight content. The content of less than 15wt% might not achieve the load bearing characteristics and rigidity enough to function desirably. The content of more than 80% might generate voids in the fiber-reinforced resin to make it difficult to form a product.

It is preferable that the first reinforcing part and the second reinforcing part is formed with the fiber-reinforced plastic comprising continuous carbon fibers.

Reinforcing fibers may be aligned in parallel with the longitudinal direction in which the slope is bridged, or aligned almost perpendicular to the longitudinal. The combination of these alignments can improve bending strength and surface pressure resistance as a whole slope.

Hereinbefore, a slope consisting of one plate member has been explained. Alternatively, it is preferable that the slope comprises two or more plate members connected to each other so that plate members (such as plate members A and B) each having at least the first reinforcing part of which surfaces can be folded as opposing to each other from a viewpoint of portability.

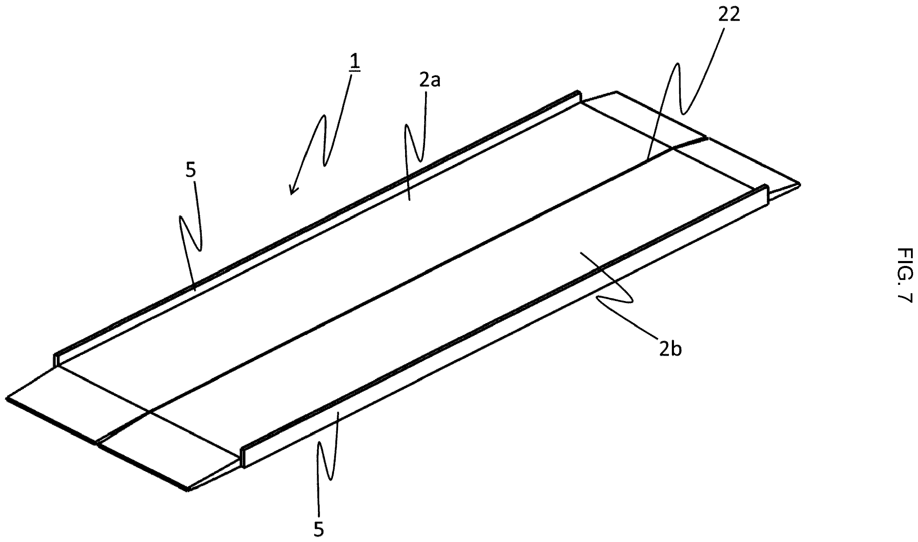

Fig. 7 is a perspective view showing a state viewed from the top side, in which plate members (such as plate members A and B) are arranged in parallel with respect to the running direction and are connected with opposing lateral surfaces of the plate member by sheet member or hinge. Symbol 22 indicates a connected part connected by the sheet member or hinge. Symbols 2a and 2b indicate plate member A and plate member B in the Fig.

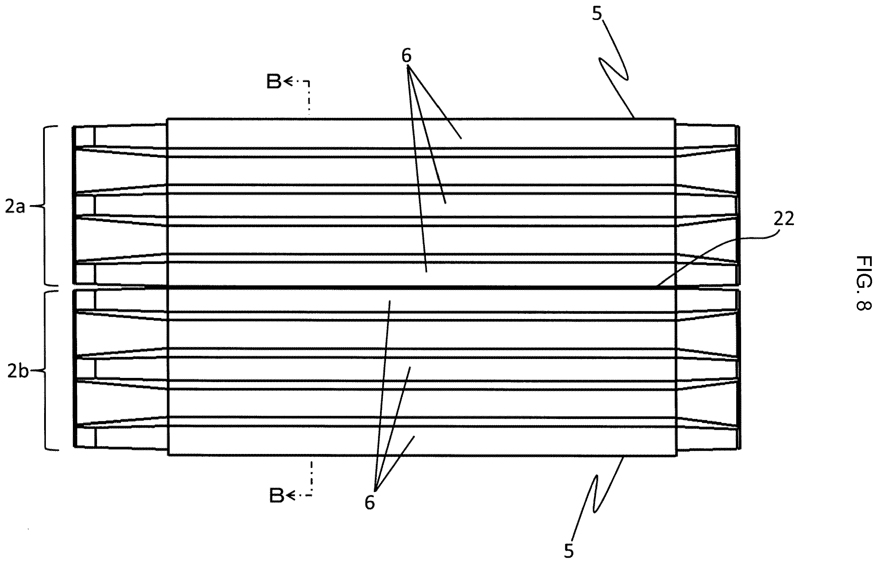

Fig. 8 is a bottom view showing a state in which plate members are arranged in parallel with respect to the longitudinal direction and are connected with opposing lateral surfaces of the plate member by sheet member. Two plate members 2a and 2b are provided as foldable. Plate member 2a is provided with three first reinforcing parts 6 while plate member 2b is provided with three first reinforcing parts 6.

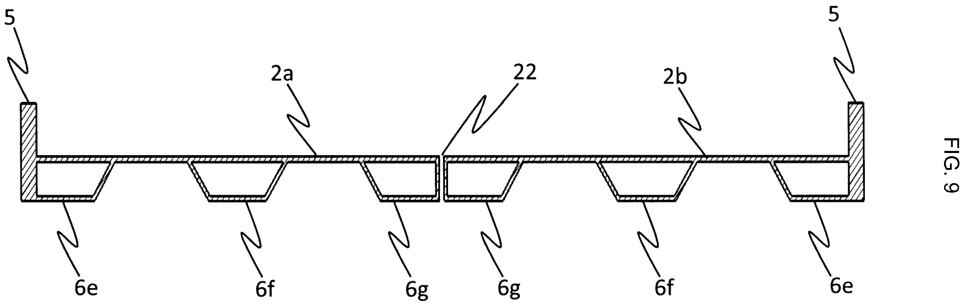

Fig. 9 is a B-B cross section view in Fig. 8. Plate member 2a is provided with first reinforcing parts 6e, 6f and 6g. Similarly, plate member 2b is provided with first reinforcing parts 6e, 6f and 6g. Derailment prevention wall 5 is configured to be provided on the lateral surface part of first reinforcing part 6e of plate member 2a as well as the lateral surface part of second reinforcing part 6e of plate member 2b.

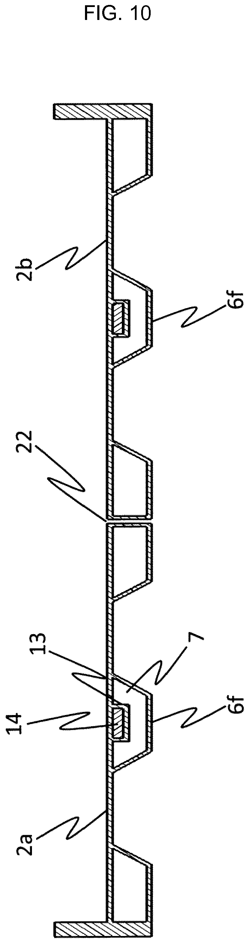

Fig. 10 is a cross section view corresponding to Fig. 9 showing a state in which the second reinforcing part is inserted. For example, first reinforcing part 6f will be explained. Insertion slot 13 having a predetermined insertion hole and a predetermined length is provided for second reinforcing part 14 to be inserted inside hollow part 7 formed between plate member 2a and first reinforcing part 6f.

A derailment prevention wall is provided on a plate member lateral end surface located at both sides of slope comprising a plate member provided with a first reinforcing part. The derailment prevention wall may be provided thereon by such a method that the plate member, first reinforcing part and derailment prevention wall are formed integrally, and that the derailment prevention wall is bonded to the plate member lateral end surface and the reinforcing part lateral surface after forming the plate member and first reinforcing part integrally. Above all, it is preferable that the first reinforcing part and the derailment prevention wall are formed integrally. With such a configuration, a process to install the derailment prevention wall is not necessary and therefore production cost can be reduced. Further, the derailment prevention wall becomes hard to break because the plate member, the first reinforcing part and the derailment prevention wall have been formed integrally. It is also preferable that the plate member, the first reinforcing part, the insertion slot of the second reinforcing part and the derailment prevention wall are formed integrally.

### Industrial Applications of the Invention

Our invention provides a portable slope to be used to bridge a difference in step produced between things.

### Explanation of symbols

- 1:: slope
- 2, 2a, 2b:: plate member
- 3:: upper end of slope
- 4:: lower end of slope 1
- 5:: derailment prevention wall
- 6, 6a, 6b, 6c, 6d, 6f, 6g:: first reinforcing part
- 7:: hollow part formed between plate and first reinforcing part
- 13:: insertion slot of second reinforcing part
- 14:: second reinforcing part
- 15:: lateral width length of plate member
- 16:: lower base length of first reinforcing part 6d
- 17:: lower base length of first reinforcing part 6b
- 18:: lower base length of first reinforcing part 6a
- 19:: lower base length of first reinforcing part 6c
- 20:: lower base length of first reinforcing part 6d
- 21:: height of first reinforcing part 6b from the top side of plate member
- 22:: connected part

## Claims

1. A potable slope comprising at least a plate member and a first reinforcing part which is provided as extending along a longitudinal direction of the slope, wherein a hollow part is formed between the plate member and the first reinforcing part.

2. The portable slope according to claim 1, wherein the first reinforcing part has a quadrangular cross section which is perpendicular to the longitudinal direction.

3. The portable slope according to claim 2, wherein the first reinforcing part has a trapezoid cross section perpendicular to the longitudinal direction, the trapezoid having at least one basic angle of 30 to 90° to contact the plate member.

4. The portable slope according to claim 3, wherein the first reinforcing part has at least one isosceles trapezoid cross section perpendicular to the longitudinal direction.

5. The portable slope according to claim 3 or 4, wherein the basic angle located at a plate member lateral part is right angle.

6. The portable slope according to any one of claims 1 to 5, further comprising a second reinforcing part.

7. The portable slope according to claim 6, wherein the second reinforcing part is formed to be inserted into the hollow part between the plate member and the first reinforcing part.

8. The portable slope according to claim 6 or 7, wherein the plate member, the first reinforcing part and the second reinforcing part are made of a fiber-reinforced plastic.

9. The portable slope according to any one of claims 1 to 8, wherein the derailment prevention wall is provided to be joined to at least a part of the plate member lateral end surface and the first reinforcing part lateral end surface.

10. The portable slope according to claim 9, wherein the derailment prevention wall is provided to be joined to a whole of the lateral end surface of the plate member and the lateral end surface of the first reinforcing part.

11. The portable slope according to claim 9 or 10, wherein the plate member, the first reinforcing part and the derailment prevention wall are formed integrally.
